# EUROPÄISCHE PATENTANMELDUNG

(11) **EP 2 183 960 A1**
(43) Veröffentlichungstag der Anmeldung: **12.05.2010**
(21) Anmeldenummer: 09174570.3
(22) Anmeldetag: 30.10.2009
(51) Int. Cl.: A01G 9/16, E05B 53/00

(54) **Gewächshaus**

(30) Priorität: 10.11.2008 DE 202008013767 U
(71) Anmelder: Einhell Germany AG, 94405 Landau / Isar (DE)
(72) Erfinder: Kagerer, Ulrich Alois, 94431, Pilsting/Oberndorf (DE)
(74) Vertreter: Benninger, Johannes

(57) **Zusammenfassung**

Die Erfindung betrifft ein Gewächshaus (10), bestehend aus einem Metall-, insbesondere Aluminiumgerüst, welches aus Profilen (12) und Streben (14) gebildet ist und lichtdurchlässige Kunststoffplatten (11) als Abdeckungen bzw. Wände und wenigstens eine Schwenk- oder Schiebetür (20) und/oder wenigstens ein zumindest teilweise öffenbares Fenster (22) aufweist, wobei die Kunststoffplatten (11) jeweils von einem umlaufenden Rahmen, der aus den Profilen (12) und Streben (14) gebildet ist, gehalten sind. Es ist vorgesehen, dass die Profile (12) und/oder Streben (14) an ihren Verbindungsstellen vormontierte Gewindeelemente (17) zur gegenseitigen Fixierung bzw. Verschraubung aufweisen.

## Beschreibung

Die vorliegende Erfindung betrifft ein Gewächshaus, bestehend aus einem Metall-, insbesondere Aluminiumgerüst, welches aus Profilen und Streben gebildet ist und lichtdurchlässige Kunststoffplatten als Abdeckungen bzw. Wände und wenigstens eine Schwenk- oder Schiebetür und/oder wenigstens ein zumindest teilweise öffenbares Fenster aufweist, wobei die Kunststoffplatten jeweils von einem umlaufenden Rahmen, der aus den Profilen und Streben gebildet ist, gehalten sind.

Gewächshäuser zum Aufstellen in einem Garten oder einem Gemüsebeet sind bekannt; sie bestehen üblicherweise aus einem fachwerkartigen Rahmen, der mit Glas- oder Kunststoffplatten unterschiedlichster Abmessungen verkleidet ist. Die einzelnen Glas- oder Kunststoffplattenplatten bilden Elemente einer allseitig lichtdurchlässigen Verkleidung. Die Elemente der Verkleidung sind dabei üblicherweise mittels Klammern und Winkeln an dem Rahmen befestigt. Der Rahmen selbst besteht aus einer Vielzahl von Rahmenelementen unterschiedlichster Abmessungen, und Ausführungen.

Nachteilig an den bekannten Gewächshäusern ist, dass die Gefahr besteht, dass sich beispielsweise bei starkem Wind einzelne Elemente der Verkleidung aus den Klammern lösen. Darüber hinaus ist der Aufbau solcher Gewächshäuser aufgrund der Vielzahl von unterschiedlichen Einzelteilen sowie unterschiedlichen Abmessungen der verschiedenen Einzelteile sehr kompliziert. Zudem besteht bei der Vielzahl von unterschiedlichen Teilen, aus denen ein solches Gewächshaus zusammengebaut wird, die Gefahr, dass falsche Teile oder unzureichende Mengen einzelner Teile ausgeliefert werden, oder dass einzelne Teile aufgrund der bei einem Gewächshaus vorkommenden vielen Teile unterschiedlicher Abmessungen falsch abgelängt sind.

Eine Zugangstür wird bei den bekannten Gewächshäusern durch einen beweglichen Türrahmen gebildet, der mit mehreren Glas- oder Kunststoffplatten verkleidet ist. Die Zugangstür ist dabei üblicherweise als Schiebetür ausgeführt, da der Türrahmen nicht in der Lage ist, das Gewicht der Verkleidung ohne Verzug zu tragen. Der Umgang mit einer als Schiebetür ausgeführten Zugangstür ist äußerst unbefriedigend, da sich diese aufgrund der labilen Ausführung häufig verhakt und verkantet. Bei einer Ausführung der Zugangstür als wesentlich bedienungsfreundlichere Drehtür bestünde die Gefahr, dass sich der Türrahmen verziehen und die Verkleidung lösen könnte.

Aufgabe der Erfindung ist es, ein Gewächshaus der eingangs genannten Art zu schaffen, bei dem durch eine Verringerung der Befestigungsmittel eine verbesserte Stabilität und ein einfacher Aufbau ermöglicht werden kann.

Diese Aufgabe der Erfindung wird mit dem Gegenstand des unabhängigen Anspruchs erreicht. Merkmale vorteilhafter Weiterbildungen der Erfindung ergeben sich aus den abhängigen Ansprüchen.

Ein Gewächshaus ist eine lichtdurchlässige Konstruktion, welches aus einem Metall-, insbesondere Aluminiumgerüst bestehen kann. Dieses Gerüst kann aus Profilen und/oder Streben gebildet werden, die als Kantprofile und/oder Hohlprofile ausgebildet sein können. Dabei hat jedes Profil und jede Strebe eine unterschiedliche Funktion, bspw. können Streben als Längsträger eingesetzt werden und wobei die Profile als Grundträger dienen. Diese Profile und Streben werden, wie eingangs bereits erwähnt, insbesondere als Hohlprofile ausgebildet, da die innere Kammer bspw. als Stauraum verwendet werden kann. Zudem können die Profile und Streben mit Haltestegen ausgestattet sein, wobei in diese Haltestege lichtdurchlässige Kunststoffplatten hinein geschoben werden können.

Die Kunststoffplatten werden von einem umlaufenden Rahmen, der aus den Profilen und Streben gebildet ist, gehalten. Diese lichtdurchlässigen Kunststoffplatten können als Abdeckungen für das Dach, aber auch für die Seiten-, Front- und/oder Rückenwände dienen. Es wäre auch denkbar, dass statt Kunststoffplatten Glasplatten oder dergleichen verwendet werden.

Für die Verbindung zwischen den Profilen und/oder Streben können an den dafür vorgesehenen Verbindungsstellen vormontierte Gewindeelemente zur gegenseitigen Fixierung bzw. Verschraubung vorhanden sein. Die vormontierten Gewindeelemente werden bereits werkseitig in zuvor eingebrachte, insbesondere eingestanzte Löcher der Streben bzw. Profile eingepresst. Vorzugsweise bilden Nietmuttern diese vormontierten Gewindeelemente. Diese Nietmuttern weisen viele Vorteile auf; sie werden in den vorgebohrten oder vorgestanzten Löchern der Streben bzw. Profile unverdrehbar fixiert angebracht und ersetzen somit die gewöhnlichen Muttern, die nach der Anbringung der Schraube an diese als Gegenstück angebracht werden um eine feste fixierbare Verbindung herzustellen.

Des Weiteren kann das Gewächshaus wenigstens eine Schwenk- oder Schiebetür und/oder wenigstens ein zumindest teilweise öffenbares Fenster aufweisen. Die wenigstens eine Tür kann an einer Giebelseite des Gewächshauses angeordnet und ggf. mit einem integrierten Fenster versehen sein. Zudem kann die Tür beidseitig an den gegenüber liegenden Längsseiten eines Türrahmens eingreifende bewegliche Klemmelemente, wie Riegel, Bolzen oder dergleichen aufweisen, die jeweils in Wirkverbindung mit einem Betätigungshebel zum Öffnen der Tür stehen. Der Betätigungshebel ist vorzugsweise als hebelartige Vorrichtung ausgebildet, wie bspw. ein Griff zum Öffnen und Schließen einer Tür. Auch sind Türknäufe als Betätigungselemente denkbar, die entweder drehbar gelagert sind, oder nur als Griffe für Türen dienen, die sich durch Druck und Zug ein- und ausschnappen lassen.

Die Klemmelemente können über Zugseile, die auch als Zugdrähte ausgebildet sein können, mit dem Betätigungshebel in Wirkverbindung stehen. Dieses Zugsystem kann in den hohlen Längsstreben des Türrahmens eingebaut werden. Zudem wird der Betätigungshebel mit einer Federkraft in einer Ruhelage gehalten, bei der sich die Klemmelemente jeweils im verriegelten Eingriff mit dem Türrahmen befinden. Jedes Klemmelement ist zwischen zwei Endanschlägen verschiebbar gelagert. Der erste Endanschlag bildet die verriegelte Lage, in der die Tür geschlossen ist und der zweite Endanschlag bildet die geöffnete Lage, in der die Tür geöffnet wird.

Eine Zugfeder eines jeden Klemmelements ist mit dem Zugseil, das mit dem Betätigungshebel gekoppelt ist, in Wirkverbindung. Die Zugfeder wird über den Betätigungshebel wieder in seine Ruhelage zurück gezogen, indem der Betätigungshebel wieder in seine Ausgangslage gebracht wird. Zudem ist die Zugfeder einseitig am Rahmen und mit ihrem anderen Ende am verschiebbaren Klemmelement verankert. Die Klemmelemente können zur besseren Einrastung an seinem Eingriffsbereich mit dem Türrahmen abgeschrägt sein. Mit der Rückstellkraft der Zugfeder können die Klemmelemente wieder in seine verriegelte Lage einrasten.

Dieser Öffnungsmechanismus der Tür kann auch bei einem Fenster angewendet werden. Das Fenster ist vorzugsweise als Schiebefenster ausgebildet, welches in der Tür integriert sein kann. Ein Betätigungshebel löst hier die gleichen Mechanismen aus, wie beim Öffnen der Tür durch den Betätigungshebel. Das Zugseilsystem kann in der oberen liegenden Querseite im Hohlprofil liegen. Die Klemmelemente greifen in die Längsseiten des Türrahmens ein.

Für einen Heimwerker, der selbständig das Gewächshaus aufbaut, sollte mit einer derartigen Konstruktion eine leichte Montage gewährleistet werden. Da die Profile mit den vormontierten Gewindeelementen versehen werden, kann der Heimwerker die Profile selbständig miteinander befestigen, bzw. verschrauben. Er muss das Gegenstück der Schraube nicht mehr händisch anbringen, da die Gewindeelemente als solche ausgebildet sind. Die Gewindeelemente werden durch Nietmutter gebildet, die in die dafür vorgesehenen Löcher unter idealen Betriebsbedingungen im Herstellungsbetrieb eingepresst werden.

Aus Sicht der Montage bietet es sich an, dass die Nietmuttern auf den Grundprofilen, wie Stützen angebracht werden, damit die Verbindung mit den Querprofilen erleichtert wird. In den Querprofilen sollten somit die Bohrlöcher eingebracht sein, damit die Befestigungsschrauben hindurch gesteckt und mit der vormontierten Gewindeeinfassung am Grundprofil verschraubt werden können.

Im Folgenden werden anhand von Ausführungsbeispielen die Erfindung und ihre Vorteile der beigefügten Figuren näher erläutert. Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.
Figur 1 zeigt eine perspektivische Ansicht eines Gewächshauses
Figur 2 zeigt einen Ausschnitt einer Verbindungsart zwischen Profil und Strebe
Figur 3 zeigt einen Schnitt durch die Verbindung eines Profils mit einer Strebe
Figur 4 zeigt eine Tür mit einem integrierten Fenster
Figur 5 zeigt eine Feststelleinheit bzw. eine Profilschiene eines Schiebefensters
Figur 6 zeigt eine Draufsicht eines Schnitts durch die Feststelleinheit aus Figur 5
Figur 7 zeigt einen Querschnitt durch eine Feststelleinheit des Schiebefensters entlang einer Schnittlinie A-A aus Figur 4
Figur 8 zeigt einen Ausschnitt B aus der Figur 7 in vergrößerter Darstellung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung oder das erfindungsgemäße Verfahren ausgestaltet sein können und stellen keine abschließende Begrenzung dar.

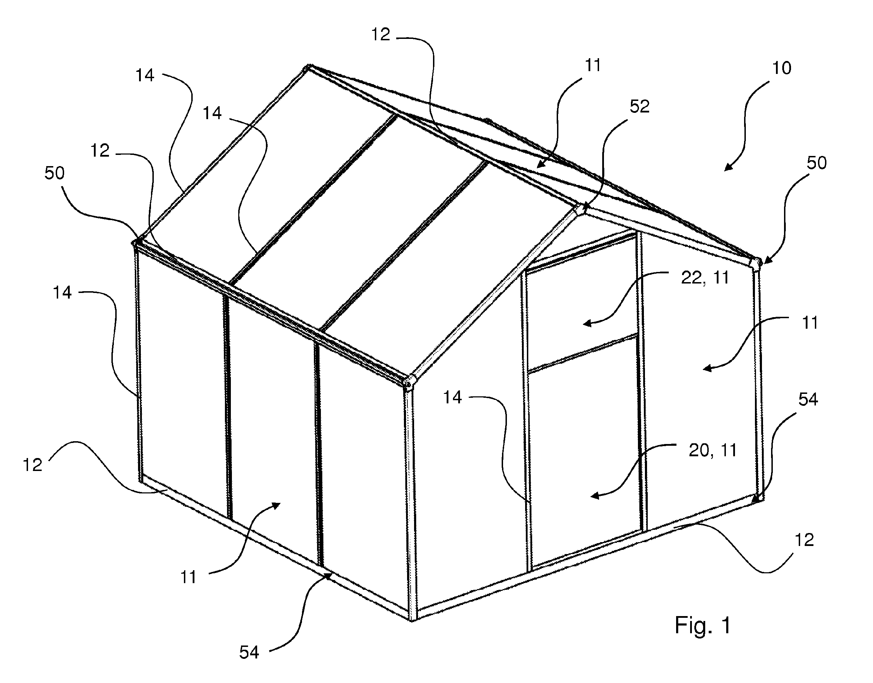

Die Figur 1 zeigt eine perspektivische Ansicht eines Gewächshauses 10, welches Kunststoffplatten 11 aufweist. Die Konstruktion wird aus Grundprofilen 12 und Streben 14 erstellt. Das Haupttragwerk des Gewächshauses 10 bilden die Grundprofile 12, d.h. die Grundprofile 12 können als Hauptstützen und Riegel eingesetzt werden. Im vorliegenden Aufführungsbeispiel werden nur Hauptträger als Grundprofile 12 verwendet. Horizontal verlaufende Riegel in den Traufen 50 und im First 52 des Gewächshauses 10 können ebenso aus Grundprofilen 12 bestehen. Auch wird ein umlaufender Sockel 54 mittels der Grundprofile 12 gebildet.

Als Längsprofile und für eine Versteifung des Gewächshauses 12 werden Streben 14 verwendet. Diese Streben 14 bilden bspw. Eckstützen sowie Zwischenstützen und Pfetten am Dach. Zudem haben diese Streben 14 eine Tragefunktion, d.h. das sie in den Zwischenflächen der Streben 14 Kunststoffplatten 11, die sowohl als Wandverkleidung sowie Dach- und Seitenverkleidung dienen, halten.

Im vorliegenden Ausführungsbeispiel besitzt das Gewächshaus 10 eine Tür 20 mit einem integrierten Schiebefenster 22. Die Elemente der Tür 20 und des Schiebefensters 22 werden wiederum von Streben 14 gebildet. Als Tür- und Fensterverkleidung können auch hier die Kunststoffplatten 11 eingesetzt werden.

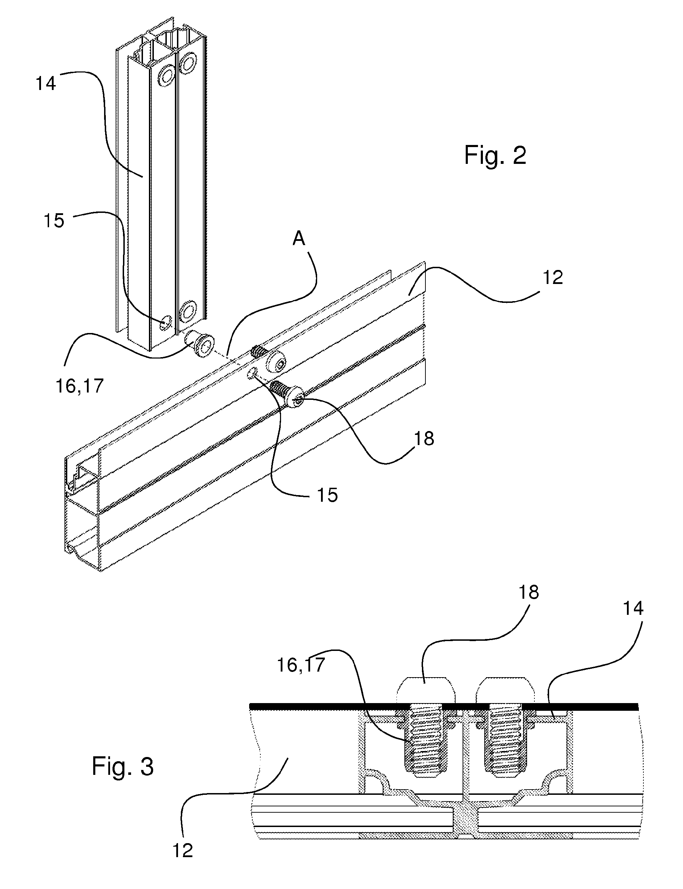

Aus der Figur 2 ist die Verbindungsart zwischen den in Figur 1 bereits beschrieben Profilen 12 und Streben 14 ersichtlich. Die Strebe 14 wird an den notwendigen Stellen werkseitig mit gestanzten Löchern 15 versehen. In diese Löcher werden in Wirkungsrichtung A Nietmuttern 16, mittels einer speziellen Handwerkzeugmaschine eingebracht. Die Anbringung der Nietmuttern 16 erfolgt ebenso werksseitig. Mit diesen Nietmuttern 16 werden somit die gewöhnlichen Muttern weggelassen und es kann ein schnellerer Aufbau des in Figur 1 dargestellten Gewächshauses 10 für einen Heimwerker gewährleistet werden.

Beim Aufbau des in Figur 1 dargestellten Gewächshauses 10 muss der Heimwerker darauf achten, dass die Streben 14 an die richtige Position des Profils 12 anlegt werden. Das Profil 12 wird im Anschluss mit der Strebe 14 fest verbunden. Hierzu werden Schrauben 18 in die bereits gestanzte Löcher 15 des Profils 12 einfügt und mit den Nietmuttern 16, die bereits in der Strebe 14 formschlüssig eingebracht worden sind, verschraubt.

Wie ein Zusammenbau des Profils 12 und der Strebe 14 aussieht, wird in der Figur 3 gezeigt. Der dargestellte Querschnitt verläuft durch die Strebe 14 und der Nietmuttern 16. Das Profil 12 ist liegend abgebildet. In dieser Figur 3 ist die Verbindung zwischen dem Profil 12 und der Sterbe 14 besserer ersichtlich. Die Schraube 18 ist in die Nietmutter 16, die bereits formschlüssig an der Strebe 14 angebracht ist, eingeschraubt. Die Nietmutter 16 verhindert das Lösen der Schraube 18, indem die Schraube 18 mit einem Gegengewinde der Nietmutter 16 verschraubt wird.

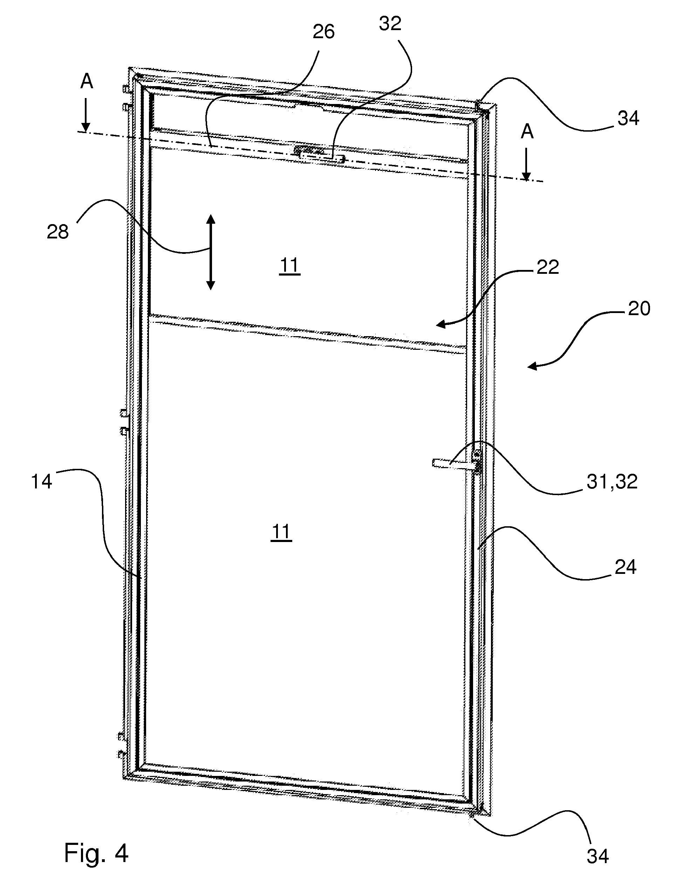

In der Figur 4 wird eine perspektivische Ansicht einer Tür 20 dargestellt. Der komplette Türrahmen kann aus Streben 14 gebildet werden, indem auch die Kunststoffplatten 11 als Türverkleidung eingebracht sein können. Zudem weist die Tür 20 ein integriertes Schiebefenster 22 auf, welches sich in eine auf- und abwärts Richtung 28 verschieben lässt und im oberen Bereich der Tür 20 angebracht ist.

Der Öffnungsmechanismus der Tür 20 erfolgt über die gewöhnliche Betätigung des Griffes 32. Dieser Griff 32 ist mit einer Feststelleinheit 24, die aus einer hohlen Strebe 14 gebildet wird, verbunden. Im Inneren dieser als Seitenstrebe ausgebildeten Feststelleinheit 24 ist ein Seilzugsystem (nicht dargestellt), welches mit dem Griff 42 in Wirkverbindung steht verbunden. Wird der Griff 42 nach unten gedrückt, so lösen sich Klemmelemente 34 aus einer Fassung, die in der Schwelle des in Figur 1 dargestellten Sockels 54 des Profils 12 eingebracht sind. Mit diesem Öffnungsmechanismus kann die Tür 20 geöffnet werden. Beim Schließen der Tür 20 greifen die Klemmelemente 34 wieder in die Fassung des in Figur 1 dargestellten Sockels 54 ein. Dieser Öffnungs- und Schließmechanismus der Tür 20 wird im Anschluss näher erläutert, bzw. ist das Gleiche Öffnungs- und Schließprinzip wie beim Schiebefenster 22.

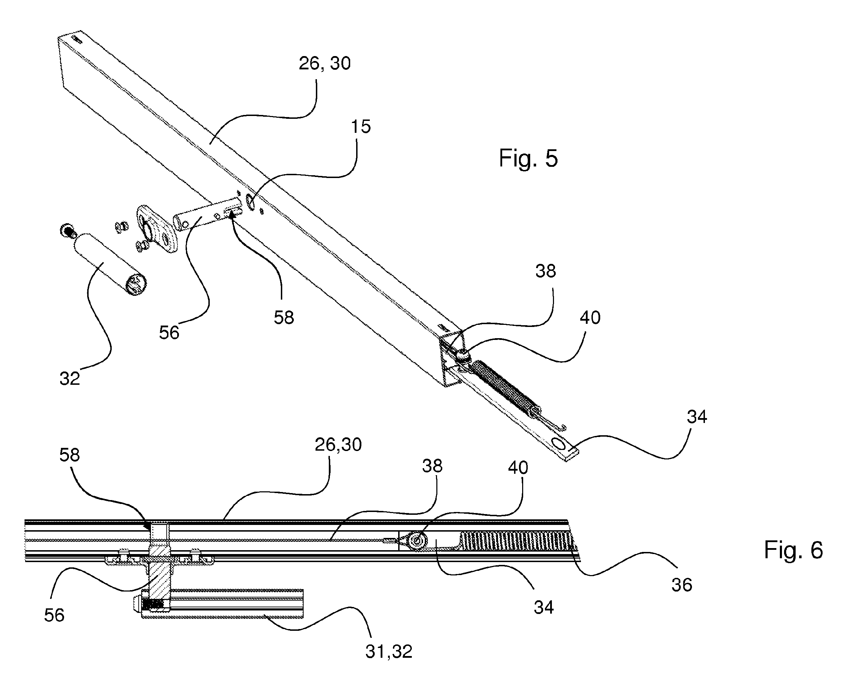

Das Schiebefenster 22, welches in der Tür 20 integriert ist, wird auch mittels einer Feststelleinheit 26 im Türrahmen befestigt. Die Kunststoffplatte 11, die als Fensterscheibe dient, kann über diese Feststelleinheit 26 nach unten zum Öffnen des Fensters oder nach oben zum Schließen des Fensters verschoben werden. Die Öffnung bzw. die Schließung des Schiebefensters 22 erfolgt über einen Griff 32. Mit einer abwärts Betätigung des Griffes 32 werden wie bei der Öffnung der Tür 20 die in Figur 5 dargestellten Klemmelemente 34 in Bewegung gebracht, die eine Einklemmung in der Strebe 14 lösen. Das Schiebefenster 22 kann durch die Betätigung des Griffes 32 in unterschiedlichen Höhen arretiert werden, indem der Griff 32 wieder in horizontale Ausgangsstellung gebracht wird. Der Rahmen des Schiebefensters 22 wird durch die Führung in den Streben 12 der Tür 20 gebildet.

In der Figur 5 wird eine Feststelleinheit 26 des in Figur 4 dargestellten Schiebefensters 22 gezeigt. Diese Feststelleinheit 26 ist als hohle Profilschiene 30 ausgebildet, in der der Öffnungsmechanismus integriert ist. Der Öffnungsmechanismus erfolgt über eine Halterung 56, die mit dem Griff 32 in Verbindung steht. Die Halterung 56 wird in ein bereits gestanztes Loch 15 in die Profilschiene 30 eingeführt. Die in die Profilschiene 30 eingeführte Seite der Halterung 56 weist eine nutenförmige Aussparung 58 auf. Diese Aussparung 58 der Halterung 56 umfasst im Inneren der Profilschiene 30 ein gespanntes Zugseil 38, d.h. wenn die Halterung 56 in die Profilschiene 30 eingeführt worden ist, sollte das Zugseil 38 durch die Aussparung 58 laufen. Zudem wird das Zugseil 38 an einem Bolzen 40 eingehängt, der an einem Klemmelement 34 befestigt ist. Das gespannte Zugseil 38 sowie die Klemmelemente 34 verlaufen in der Profilschiene 30.

Die Figur 6 zeigt einen Ausschnitt eines Querschnitts, der durch den Griff 32 und der Feststelleinheit 26 des Schiebefensters entlang einer Schnittlinie A-A der Figur 4 verläuft. Dieser Querschnitt läuft mittig durch den bereits angebrachten Griff 32 an der Profilschiene 30 sowie der Halterung 56. Aus dieser Ansicht ist die Führung des gespannten Zugseils 38 in der Aussparung 58 der Halterung 56 besser zu erkennen. Das gespannte Zugseil 38 wird um einen Haltebolzen 40 gewickelt, an dem noch eine Zugfeder 36 eingehängt wird. Der Haltebolzen 40 ist mit dem Klemmelement 34 verbunden, so dass der in der Beschreibung erwähnte Öffnungs- und Schließmechanismus gewährleistet werden kann.

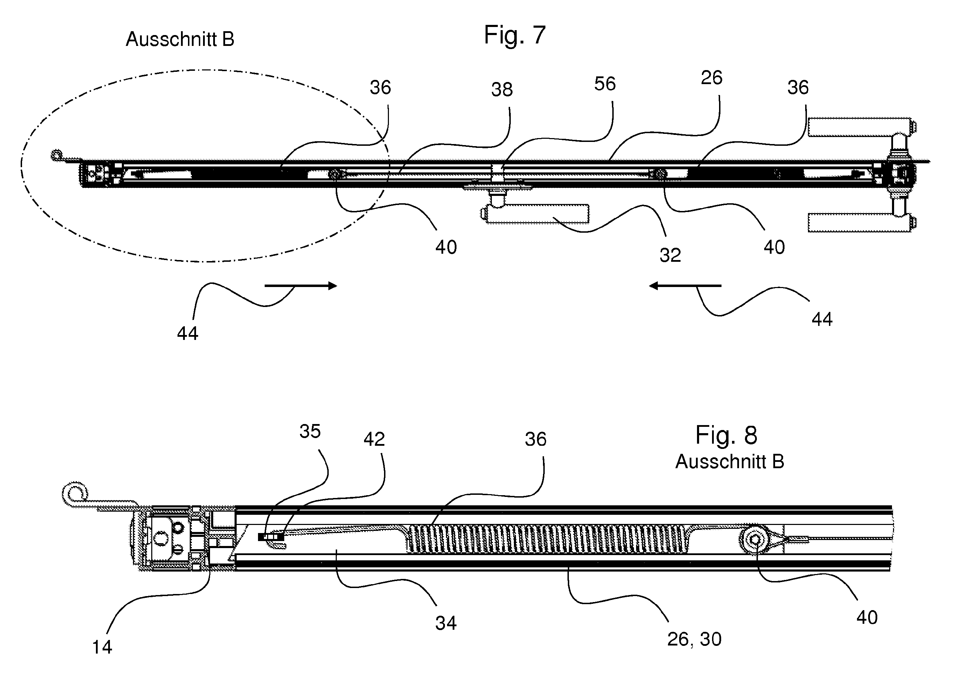

Die Figur 7 zeigt einen kompletten Querschnitt durch die Feststelleinheit 26 des Schiebefensters 22 entlang einer Schnittlinie A-A aus Figur 4. Aus diesem Querschnitt ist das Öffnungs- und Schließprinzip des Schiebefensters 22 ersichtlich. Wird der Griff 32 nach unten, hier in der Figur in Richtung Blattebene bewegt, so dreht sich die Halterung 56 um einen Winkel bis zu 90 Grad. Während dieser Drehung wird das Zugseil 38 um die Halterung 56 gewickelt. Die Führung des Zugseils 38 zwischen der nutenförmigen Aussparung 58 der Halterung 56 ist in der Figur 5 dargestellt.

Durch den Betätigungsvorgang des Griffes 32 werden die Zugfedern 36 sowie das Zugseil 38 in Richtung der Schiebefenstermitte 44 gezogen. Dieser Vorgang ist möglich, da diese Elemente an dem Haltebolzen 40 befestigt sind. Durch die Einhängung der anderen Seite der Zugfeder 36 in ein dafür vorgesehene Einhängemittel kann die Bewegung der Klemmelemente 34 gewährleistet werden. Das Einhängemittel kann bspw. als Haltestift, Bolzen oder ähnlichen ausgebildet sein.

Die Figur 8 zeigt einen Ausschnitt B aus der Figur 7 in vergrößerter Darstellung. Es wird die Einhängung der Zugfeder 36 an das Einhängemittel 42 verdeutlicht, welches durch das Klemmelement 34 geführt wird. Die Klemmelemente 34 weisen eine Öffnung 35 auf (auch in Figur 5 ersichtlich), durch die das Einhängemittel 42 hindurch geschoben werden kann. Die Öffnung 35 kann bspw. als Langloch ausgebildet sein, dadurch kann ein Verschiebungsweg der Klemmelemente 34 in Richtung der Schiebefenstermitte 44 gewährleistet sein. Die Klemmelemente 34 werden durch die Betätigung des Griffes von jeder Seite gleichzeitig aus seinen Halterungen gelöst.

In der Figur 8 ist zudem die Führung des Klemmelements 34 in der Profilschiene 30 der Feststelleinheit 26 nochmals deutlicher dargestellt. Das Klemmelement 34 greift mit einem Endanschlag in die seitliche Strebe 14 der in Figur 4 dargestellten Tür 20 ein, ebenso greift das gegenüberliegende Klemmelement 34 in die andere seitliche Strebe (nicht dargestellt) der Tür 20 ein. Die Einhängung der Zugfeder 36 erfolgt über die Anbringung an den Bolzen 40 und an das Einhängemittel 42.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Gewächshaus
- 11: Kunststoffplatten
- 12: Profil, Grundprofil
- 14: Strebe
- 15: gestanztes Loch
- 16: Nietmutter
- 17: vormontierte Gewindeelemente
- 18: Schraube
- 20: Tür
- 22: Schiebefenster
- 24: Feststelleinheit Tür
- 26: Feststelleinheit Fenster
- 28: Richtung
- 30: Profilschiene
- 31: Betätigungshebel
- 32: Griff
- 34: Klemmelement
- 35: Öffnung
- 36: Zugfeder
- 38: Zugseil
- 40: Haltebolzen
- 42: Einklemmmittel
- 44: Richtung Schiebefenstermitte
- 50: Traufe
- 52: First
- 54: Sockel
- 56: Halterung
- 58: nutenförmige Aussparung

- A: Wirkungsrichtung

## Patentansprüche

1. Gewächshaus (10), bestehend aus einem Metall-, insbesondere Aluminiumgerüst, welches aus Profilen (12) und Streben (14) gebildet ist und lichtdurchlässige Kunststoffplatten (11) als Abdeckungen bzw. Wände und wenigstens eine Schwenk- oder Schiebetür (20) und/oder wenigstens ein zumindest teilweise öffenbares Fenster (22) aufweist, wobei die Kunststoffplatten (11) jeweils von einem umlaufenden Rahmen, der aus den Profilen (12) und Streben (14) gebildet ist, gehalten sind, **dadurch gekennzeichnet, dass** die Profile (12) und/oder Streben (14) an ihren Verbindungsstellen vormontierte Gewindeelemente (17) zur gegenseitigen Fixierung bzw. Verschraubung aufweisen.

2. Gewächshaus (10) nach Anspruch 1, **dadurch gekennzeichnet, dass** die vormontierten Gewindeelemente (17) in zuvor eingebrachte, insbesondere eingestanzte Löcher (15) der Streben (14) bzw. Profile (12) eingebracht sind.

3. Gewächshaus (10) nach einem der Ansprüche 1 und 2, **dadurch gekennzeichnet, dass** die vormontierten Gewindeelemente (17) durch Nietmuttern (16) gebildet sind.

4. Gewächshaus (10) nach einem der Ansprüche 1 bis 3, **dadurch gekennzeichnet, dass** die Nietmuttern (16) in vorgebohrten oder vorgestanzten Löchern (15) der Streben (14) bzw. Profile (12) unverdrehbar fixiert sind.

5. Gewächshaus (10) nach einem der Ansprüche 1 bis 4, **dadurch gekennzeichnet, dass** die Profile (12) durch Kantprofile und/oder Hohlprofile gebildet sind.

6. Gewächshaus (10) nach einem der Ansprüche 1 bis 5, **dadurch gekennzeichnet, dass** die wenigstens eine Tür (20) an einer Giebelseite des Gewächshauses (10) angeordnet und ggf. mit einem integrierten Fenster (22) versehen ist.

7. Gewächshaus (10) nach Anspruch 6, **dadurch gekennzeichnet, dass** die Tür (20) beidseitig an gegenüber liegenden Längsseiten eines Türrahmens eingreifende bewegliche Klemmelemente (34) aufweist, die jeweils in Wirkverbindung mit einem Betätigungshebel (31) zum Öffnen der Tür (20) stehen.

8. Gewächshaus (10) nach Anspruch 6 oder 7, **dadurch gekennzeichnet, dass** die Klemmelemente (34) mittels Zugseilen (38) mit dem Betätigungshebel (31) wirkverbunden sind.

9. Gewächshaus (10) nach einem der Ansprüche 6 bis 8, **dadurch gekennzeichnet, dass** der Betätigungshebel (31) mittels Kraft einer Zugfeder (38) in einer Ruhelage gehalten ist, bei der sich die Klemmelemente (34) jeweils im verriegelten Eingriff mit dem Türrahmen befinden.

10. Gewächshaus (10) nach einem der Ansprüche 6 bis 9, **dadurch gekennzeichnet, dass** jedes Klemmelement (34) zwischen zwei Endanschlägen verschiebbar ist.

11. Gewächshaus (10) nach einem der Ansprüche 6 bis 10, **dadurch gekennzeichnet, dass** der erste Endanschlag die verriegelte Lage bildet und der zweite Endanschlag die geöffnete Lage bildet.

12. Gewächshaus (10) nach einem der Ansprüche 6 bis 11, **dadurch gekennzeichnet, dass** die Zugfeder (36) jedes Klemmelements (34) mittels des Zugseils (38) mit dem Betätigungshebel (31) gekoppelt ist und diesen in die Ruhelage zieht.

13. Gewächshaus (10) nach einem der Ansprüche 6 bis 12, **dadurch gekennzeichnet, dass** die Zugfeder (36) einseitig am Rahmen verankert und mit ihrem anderen Ende am verschiebbaren Klemmelement (34) verankert ist.

14. Gewächshaus (10) nach einem der Ansprüche 6 bis 12, **dadurch gekennzeichnet, dass** das Klemmelement (34) an seinem Eingriffsbereich mit dem Türrahmen abgeschrägt ist und gegen die Rückstellkraft der Feder (36) in seine verriegelte Lage einrastet.
